# EUROPEAN PATENT APPLICATION

(11) **EP 1 555 431 A1**
(43) Date of publication of application: **20.07.2005**
(21) Application number: 03758854.8
(22) Date of filing: 24.10.2003
(51) Int. Cl.: F02M 69/00, F02M 69/04, B62M 7/02, B62J 9/00, B62J 35/00

(54) **TWO-WHEELED MOTOR VEHICLE**

(30) Priority: 25.10.2002 JP 2002311487
(71) Applicant: YAMAHA HATSUDOKI KABUSHIKI KAISHA, Iwata-shi, Shizuoka 438-8501 (JP)
(72) Inventor: TSUZUKU, Hiroyuki, Yamaha Hatsudoki KK, Iwata-shi, Shizuoka 438-8501 (JP); ISHII, Wataru, Yamaha Hatsudoki KK, Iwata-shi, Shizuoka 438-8501 (JP); HANAJIMA, Toshiharu, Yamaha Hatsudoki KK, Iwata-shi, Shizuoka 438-8501 (JP); TOMII, Eiji, Yamaha Hatsudoki KK, Iwata-shi, Shizuoka 438-8501 (JP)
(74) Representative: Grünecker, Kinkeldey, Stockmair & Schwanhäusser Anwaltssozietät
(86) International application number: PCT/JP2003/013593
(87) International publication number: WO 2004/038213

(57) **Abstract**

An engine is disposed below a seat 21 with a cylinder head 3 arranged on a front side of the vehicle and a intake pipe 31 extending from above the cylinder head 3 to the rear of the vehicle is disposed above the engine. The cylinder head 3 of the engine includes an injector mounting section in which an injector 11 for ejecting a fuel is mounted and an injection nozzle 11a is arranged in a position between an axis of an intake valve 7 and a center axis of an intake port 3g, close to an end of the intake port 3g on the intake valve side. The injector 11 and an intake pipe 31 are arranged so as to be prevented from interfering with each other. This prevents the injector 11 from interfering with the intake pipe 31 above the engine, and therefore it is possible to form a space between the lower portion of the seat 21 and the intake pipe 31, and avoid, when this space is used as a storage box 22, interference between the injector 11 and storage box and prevent the capacity of the storage box from reducing.

## Description

### Technical Field

The present invention relates to a motor cycle mounted with an engine provided with an intake unit having a fuel injection valve in an intermediate portion of an intake passage.

### Background Art

The related art engines provided with a fuel injection type intake unit include an engine (for example, see Unexamined Japanese Patent Publication No.HEI09-014102) provided with a fuel injection valve on the downstream side of throttle valves in an intake passage communicating with an intake valve opening.

In the related art engine provided with an intake unit, a fuel injection valve (hereinafter referred to as injector) is provided in an intake manifold constituting a part of an intake passage and spaced from an intake valve opening toward an upstream side thereof.

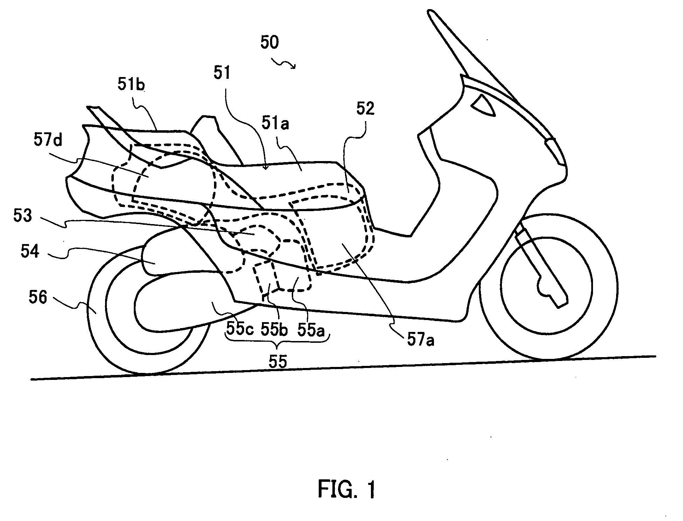

FIG.1 illustrates a schematic configuration of a motor cycle in which the engine in the above described configuration is mounted below a storage box which is opened and closed by and with a seat. In a generally adopted structure of a motor cycle 50 shown in FIG.1, a storage box 52 whose cover is formed of a seat 51 is formed below the seat 51, and below this storage box 52 is an engine 55 including an intake pipe 53 and an air cleaner 54 in the upper portion thereof.

The motor cycle shown in FIG.1 is built for two riders and the seat 51 is constructed of a front seat section 51a and a rear seat section 51b. The storage box 52 stores helmets 57a, 57b.

The engine 55 is provided with a cylinder head 55a, a body cylinder 55b and a crank case 55c in that order from the front of the vehicle and a rear tire 56 is disposed on the side of the crank case.

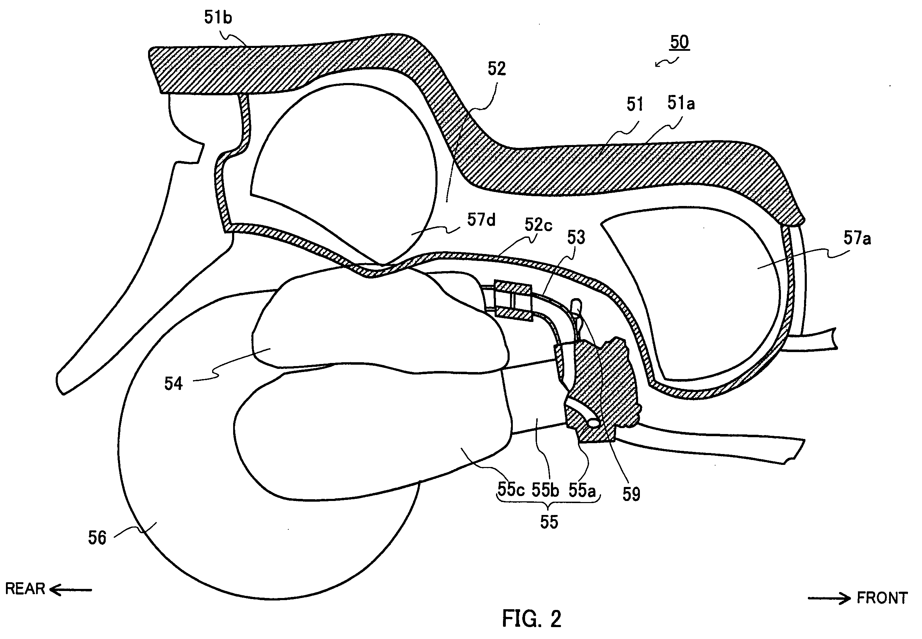

FIG.2 shows a cross-sectional view of an area in which the engine of the motor cycle in FIG.1 is mounted.

Since the engine 55 has a structure provided with a conventional intake unit, an injector 59 is provided on an intake pipe 53 connected to an upper surface of the cylinder head 55a. This injector 59 needs to inject a gas around an intake valve 55d provided on the cylinder head 55a for functional reasons, and therefore the injector 59 is mounted in a bent part of the intake pipe 53 which is bent backward from the cylinder head 55a in an upright position with respect to the horizontal direction.

Thus, when the engine is mounted below a storage box opened and closed by and with a seat, the injector readily interferes with a bottom surface of the storage box. In order to secure a space for the installation of this injector, it is necessary, as shown in FIG.2, that the storage box 52 be provided with a recess 52c for preventing the storage box 52 from interfering with the injector 59, but forming the recess 52c results in aproblemof causing the capacity of the storage box 53 to decrease by a volume corresponding to the recess.

### Disclosure of Invention

It is an object of the present invention to prevent an injector and a storage box from interfering with each other and prevent the capacity of the storage box from decreasing.

The object of the present invention is achieved by a motor cycle provided with an engine located under a seat, whose cylinder head is disposed on a front side of the vehicle, with an intake pipe extending from above the cylinder head to the rear of the vehicle disposed above the engine, the engine comprising an intake valve mounting section in which an intake valve for sucking air into a cylinder is mounted, an exhaust valve mounting section in which an exhaust valve for exhausting a gas from the cylinder is mounted, an intake port connected to the intake pipe for supplying outer air into the intake valve, an injector mounting section in which an injector for ejecting a fuel is mounted and a fuel injection port is disposed in a position between an axis of the intake valve and a center axis of the intake port, close to an end of the intake port on the intake valve side, and a cylinder head with which the intake valve mounting section, the exhaust valve mounting section, the intake port and the injector mounting section are formed integral, wherein the intake pipe and injector are disposed so as to be prevented from interfering with each other.

### Brief Description of Drawings

FIG.1 illustrates a schematic configuration of a conventional motor cycle;
FIG.2 is a cross-sectional view of an engine mounting section of the motor cycle in FIG.1;
FIG.3 is a right side view of the mounting condition of an engine for the motor cycle according to a first embodiment of the present invention;
FIG.4 is a right side view of the mounting condition of the engine;
FIG.5 is a partial cross-sectional plain view showing the mounting condition of the engine;
FIG.6 is a plain view showing the mounting condition of the engine;
FIG.7 is a cross-sectional side view of the engine;
FIG.8 is a cross-sectional front view of the engine;
FIG.9 illustrates main components of the motor cycle according to the first embodiment of the present invention; and
FIG.10 is a right side view showing the mounting condition of an engine for a motor cycle according to a second embodiment of the present invention.

### Best Mode for Carrying out the Invention

With reference now to the attached drawings, embodiments of the present invention will be explained in detail below.

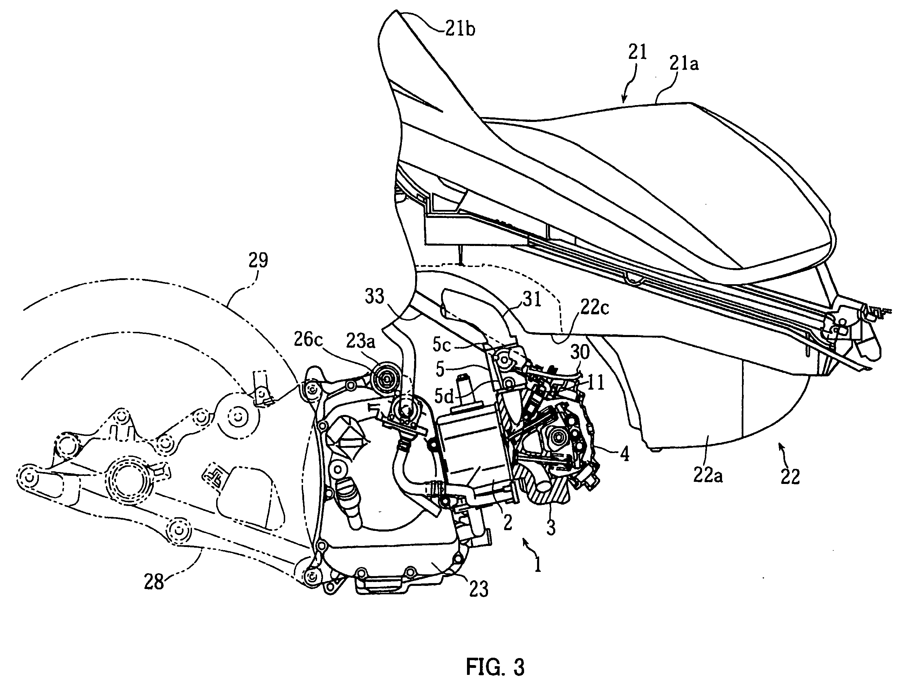

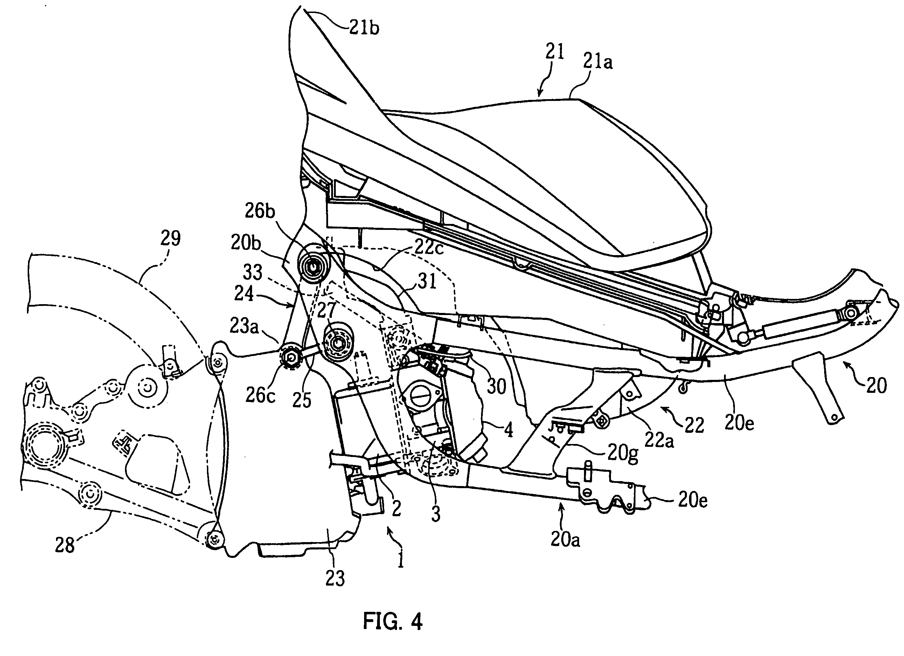

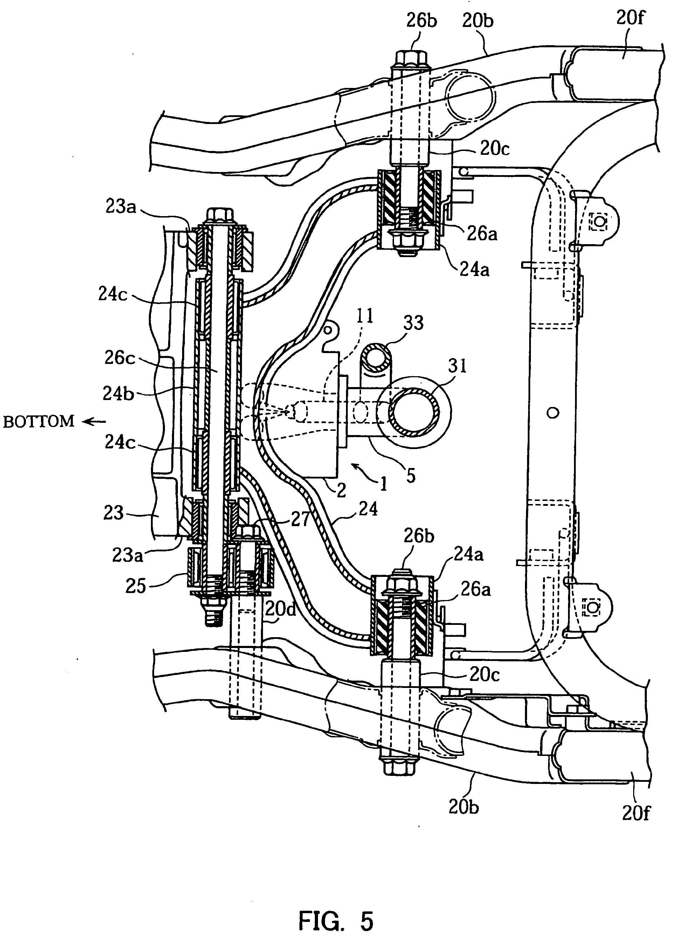

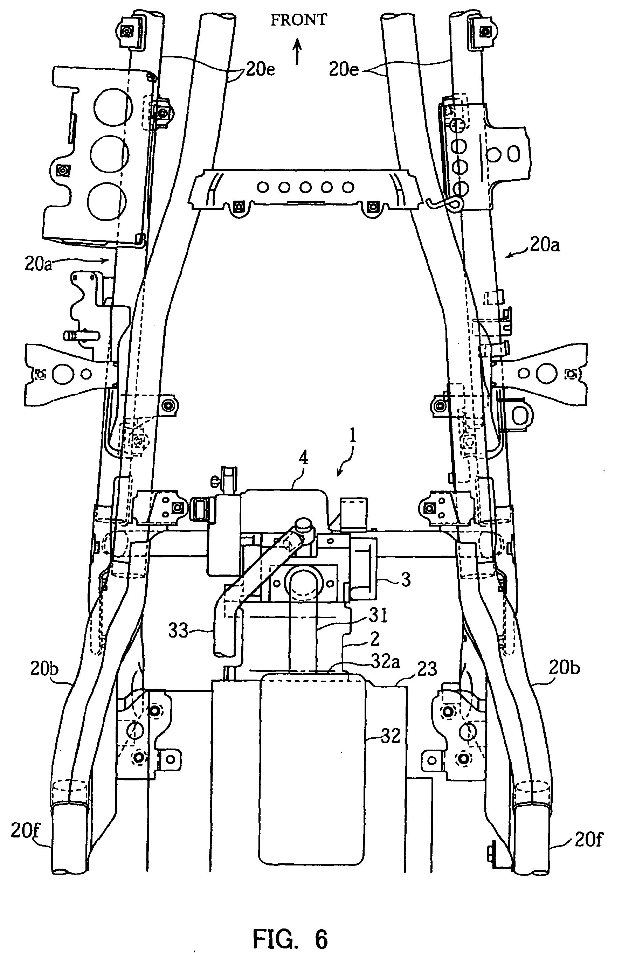

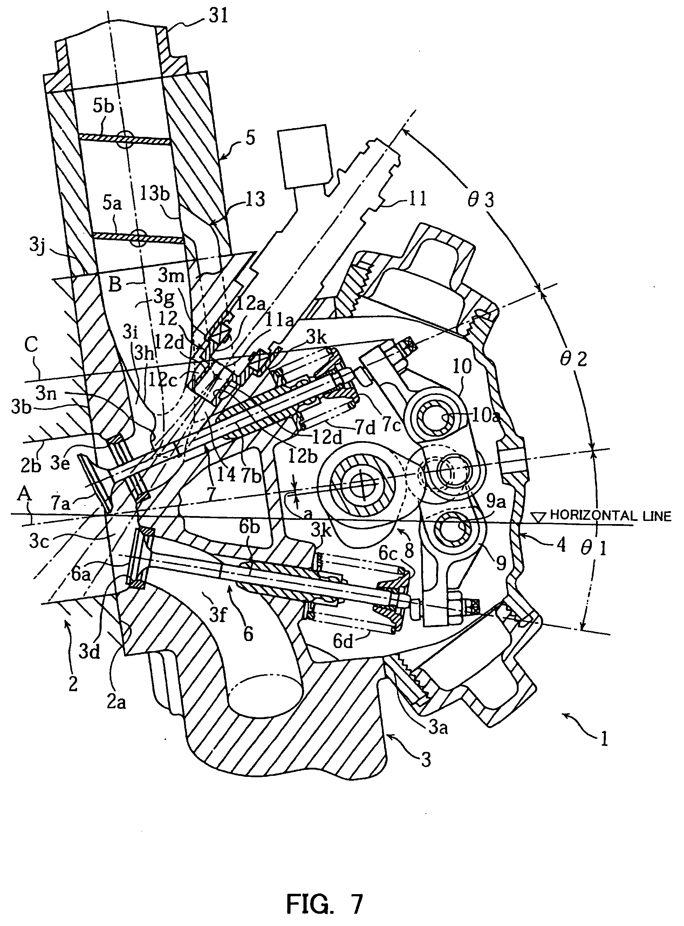

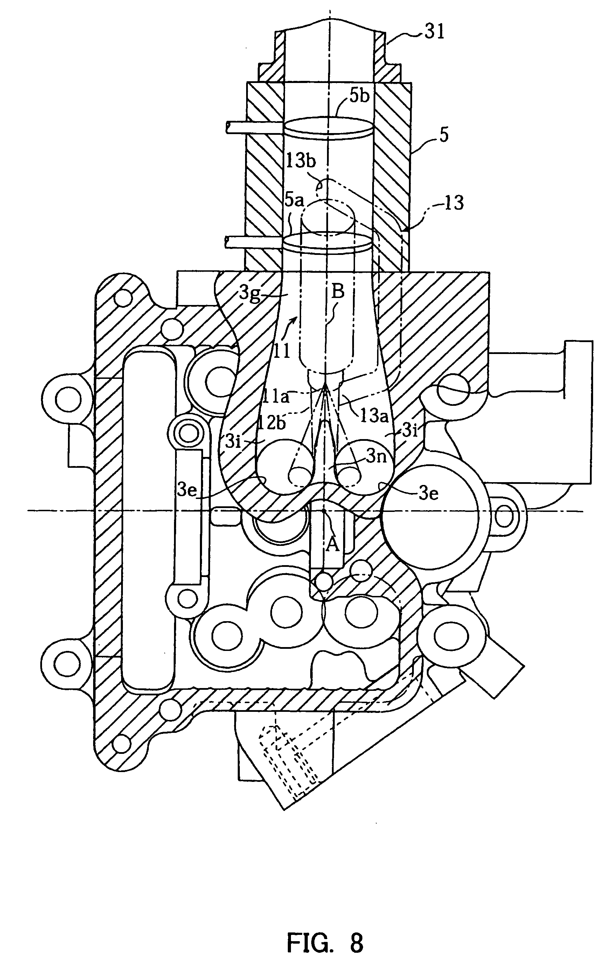

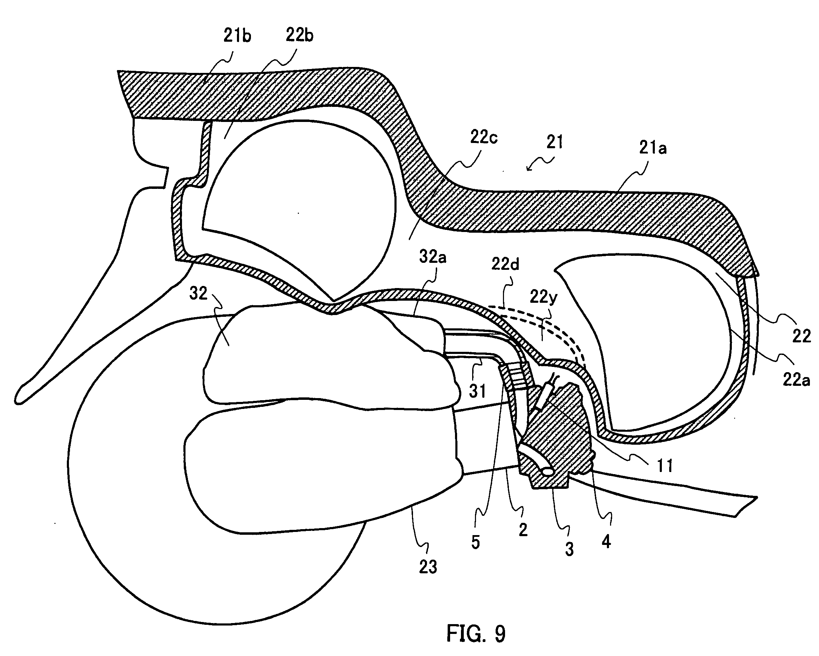

FIG.3 to FIG.9 illustrate a motor cycle according to a first embodiment of the present invention, FIG. 3 and FIG. 4 being side views showing the mounting condition of an engine, FIG.5 and FIG.6 being plain views showing the mounting condition of the engine, FIG.7 and FIG.8 being a cross-sectional side view and a cross-sectional front viewof a cylinder head of the engine, and FIG. 9 being a cross-sectional view showing main components of the motor cycle.

Note that broken lines 22z shown in FIG.9 denote a bottom surface of a storage box 22 when an engine whose intake pipe is mounted with an injector is mounted. In this embodiment, the front, rear, left and right means the front, rear, left and right sides of the motorcycle viewed by a person sitting on a seat thereof.

Referring to the drawings, reference numeral 20 denotes an under-bone type body frame of a scooter (motorcycle). This body frame 20 is provided with a pair of left and right main pipes 20a, 20a fixed to head pipes (not shown) supporting a front fork which supports at a lower end portion thereof a front wheel by a shaft so that the front wheel can be directed to left and right freely (see FIG.6).

The left and right main pipes 20a are ladder shaped and made up by connecting the upper and lower pipes using a plurality of connecting members (not shown) together and rear end portions of the upper and lower pipes 20e, 20e are connected by engine support brackets 20b made of a sheet metal and having a closed cross section. The engine support brackets 20b are provided at rear end portions thereof with seat support members 20f so that the seat support members 20f extend in the diagonally rearward and upward direction.

A tandem seat 21 is mounted on the portion of the scooter which is above a space extending from a space between rear parts of the left and right main pipes 20a to that between the left and right seat support members 20f.

This seat 21 includes a front seat portion 21a for a driver and a rear seat portion 21b for a fellow rider, and the rear seat portion 21b is positioned higher than the front seat portion 21a. The seat 21 generally has a stepped form.

Under the seat 21, a storage box 22 is provided. This storage box 22 includes a front portion 22a formed by bulging the part of the storage box which is positioned below a front half section of the front seat portion 21a in the downward direction greatly to secure the volume of this storage space, a rear portion 22b (see FIG.9) formed by bulging the part of the storage box which is positioned below the rear seat portion 21b in the upward direction in conformity with the shape of the stepped form of the seat to secure the volume of this storage space, and a comparatively shallow intermediate portion 22c positioned so as to connect the front portion 22a and rear portion 22b together. An upper opening of the storage box 22 is opened and closed by and with the seat 21.

Below the storage box 22, a unit swinging type engine unit 1 is provided with a cylinder axis A extended forward and backward course of a vehicle, more specifically, in such a manner that the cylinder axis A is inclined slightly upward from a horizontal plane in the forward direction and with a crankshaft extended vertically pivotably in the widthwise direction of the scooter.

Left and right boss portions 23a, 23a formed at a front end section of an upper wall of a crank case 23 of the engine unit 1 are supported between the left and right engine support brackets 20b, 20b by a pair of pivotable brackets 24.

More specifically, as shown in FIG.5, the pivotable brackets 24 are bifurcated, and left and right cylindrical portions 24a, 24a formed at end sections of left and right leg parts are fixed by bolts 26b to the boss portions 20c of the engine support brackets 20b by rubber dampers 26a.

Furthermore, in the pivotable brackets 24, a central cylindrical portion 24b in the middle of the full width of the crank case 23, formed in the middle of the pivotable brackets 24, supports a support shaft 26c, which is inserted through the left and right boss portions 23a, 23a by left and right bearings 24c, 24c.

One boss portion 23a is connected by a bolt 27 to the boss portion 20d of one engine support bracket 20b by a fixing bracket 25 provided on an outer side of the boss portion 23a.

The pivotable brackets 24, fixing bracket 25 and fixing bolts 26b, 27 therefor form in side view a triangle, on an apex of which the engine unit 1 is supported.

Thus, the engine unit 1 is made vertically pivotable around the central cylindrical portion 24b, and the transmission of the vibrations of the engine to the body frame is suppressed by the rubber dampers 26a.

As shown in FIG.3, the engine unit 1 is a water-cooled 4-stroke single cylinder type engine unit, which is formed by fixing a cylinder block 2 and a cylinder head 3 in a superposed state to a front wall of the crank case 23 containing a crankshaft therein, providing a head cover 4 to a front mating surface 3a of the cylinder head 3. Furthermore, a transmission case, which contains a V-belt type continuously variable transmission therein, is provided on a left side of the crank case 23 so that the transmission case is made integral with the crank case 23. Reference numeral 28 denotes a rear arm, which is fixed to a right side of the crank case 23, extends rearward, and supports a right end of an axle of a rear wheel 29.

As shown in FIG.7, in a cylinder bore 2b of the cylinder block 2, a piston (not shown) is inserted freely slidably, and connected to a crankshaft by a connecting rod.

A rear mating surface 3b of the cylinder head 3 is provided with a combustion recess 3c of a concave shape forming a combustion chamber with the piston in the cylinder bore 2b. In this combustion recess 3c, two exhaust valve openings 3d and two intake valve openings 3e communicating with the combustion chamber are formed.

Each of the exhaust valve openings 3d is connected to an exhaust port 3f formed in the cylinder head 3 and the exhaust gas from the exhaust valve openings 3d is conducted to a lower wall of the cylinder head 3.

Each of the intake valve openings 3e is connected to the intake port 3g formed in the cylinder head 3 and the intake air to the intake valve opening 3e is conducted by the intake port 3g from an upper wall of the cylinder head 3.

Each of the exhaust valve openings 3d is opened and closed by and with a valve head 6a of the exhaust valve 6, which moves forward and backward in a direction perpendicular to the opening plane of the exhaust valve opening 3d. The exhaust valve 6 is disposed in the cylinder head 3 and the valve stem 6b of this exhaust valve 6 is disposed inclined in a lower side portion of the engine so that the valve stem 6b and the cylinder axis A form an angle of θ1. Furthermore, a retainer 6c is provided at a base end of the valve stem 6b and valve springs 6d are interposed between this retainer 6c and a spring seat 3k formed in the cylinder head 3. These valve springs 6d bias the exhaust valve 6 in the direction in which the shaft 7b moves away from the intake valve opening 3e, that is, direction in which the valve head 7a closes the exhaust valve opening 3d.

Furthermore, each of the intake valve openings 3e is opened and closed by and with a valve head 7a of the intake valve 7, which moves forward and backward in a direction perpendicular to the opening plane of the intake valve opening 3e. The intake valve 7 is disposed in the cylinder head 3 and the valve stem 7b of this intake valve 7 is disposed inclined in an upper side portion of the engine so that the valve stem 7b of the intake valve 7 and the cylinder axis A form an angle of θ2. Furthermore, a retainer 7c is provided at a base end of the valve stem 7b and valve springs 7d are interposed between this retainer 7c and a spring seat 3k formed in the cylinder head 3. These valve springs 7d bias the intake valve 7 in the direction in which the shaft 7b moves away from the intake valve opening 3e, that is, direction in which the valve head 7a closes the intake valve opening 3e.

Furthermore, a cam shaft 8 for both the intake of the air and the exhaust of a gas is provided rotatably so that the cam shaft is positioned between the springs 7d, 6d of the intake valve 7 and exhaust valve 6 of the cylinder head 3.

In front of a space between the cam shaft 8 and exhaust valve 6, an exhaust rocker arm 9 is provided and supported rotatably on an exhaust rocker shaft 9a.

Furthermore, in front of a space between the cam shaft 8 and intake valve 7, a intake rocker arm 10 is provided and supported rotatably on an intake rocker shaft 10a. These rocker arms 9, 10 contact the cam of the cam shaft 8 at one end, presses upper ends of the shafts 6b, 7b at the other end as the cam shaft 8 rotates, thus moving the shafts 6b, 7b opposite to their respective bias directions. The exhaust and intake rocker shafts 9a, 10a are supported on boss portions projecting from an inner surface of the head cover 4.

Here, the cam shaft 8 is provided so as to be offset by gap a with respect to the cylinder axis A toward the exhaust side, and, accordingly, the angle θ2 formed by the intake valve 7 and the cylinder axis A is set smaller than angle θ1 formed by the exhaust valve 6 and the cylinder axis A. Namely, the intake valve 7 is positioned upright so as to come closer to the cylinder axis A as compared with the exhaust valve 6. As a result, a larger space is secured in the portion of the engine which is between the intake valve 7 and an upper side section of the engine and using this space allows the injector 11 which will be described later to be disposed freely.

In the cylinder head 3, the intake port 3g is bent at the intake valve opening 3e in the direction which is substantially at right angles to the cylinder axis A and then extended upward to form a part of the intake passage from which the outside air is introduced into the interior of a combustion chamber.

A bent portion at a downstream end of the intake port 3g is divided by a partition wall 3h into branch passages 3i, 3i communicating with the left and right intake valve openings 3e, 3e. A throttle body 5 constituting a part of the intake passage is connected to an outer connectingport 3j at an upstream end of the intake port 3g.

The throttle body 5 is provided therein with first and second throttle valves 5a, 5b in the mentioned order from the downstream side thereof and disposed close to the intake port 3g.

One end of a throttle operating cable 30 is connected to a driving pulley 5c fixedly mounted on a shaft of the second throttle valve 5b, and the other end of the cable 30 is connected to a throttle grip of a steering handle.

The driving pulley 5c of the second throttle valve 5b and the first throttle valve 5a are connected together by a link type delay mechanism 5d.

The degrees of opening of the first and second throttle valves 5a, 5b are controlled in the following manner in accordance with the variation of load (a throttle operating quantity).

The first throttle valve 5a provided on the downstream side is kept in a fully closed position from a no-load (idling) operation region to a predetermined partial load operation region.

The atomization air for facilitating the atomization of the injected fuel is thereby supplied near an injection nozzle 11a of the injector 11 in large quantities. Thus, the throttle body 5 facilitates gasification of the injected fuel in operation with a low load by supplying the large quantity of atomization air to a position near the injection nozzle 11a. The second throttle valve 5b provided on the upstream side is a regular throttle valve for controlling the area of the passage in accordance with a throttling operation.

Then, as shown in FIG.7, the injector 11 is provided on the side of a front wall of the intake port 3g so that the injector 11 is aligned in front elevation with an axis B of the intake port 3g and inclined in cross section of the cam shaft toward the upper side portion of the engine at an angle of (θ2+θ3) with respect to the cylinder axis A. The position of installation, angle and the like of the injector 11 are set such that a gas/air mixture of the fuel and atomization air is injected through mainly the portion of an annular gap between the intake valve opening 3e and an outer surface of the valve head 7a of the intake valve 7 in an opened position which is on the side of the cylinder axis A along the portion of an inner surface of the cylinder bore 2b which is on the side of the exhaust valve opening and in the direction of the cylinder axis A.

That is, the injector 11 is arranged in the cylinder head 3 at such an angle that the injection nozzle 11a which is the fuel injection port is disposed opposite to the intake valve opening 3e and a mixture of a fuel injected from the injection nozzle 11a and air generates air motion such as tumble in the cylinder.

That is, the injector 11 is arranged at such a position as shown in FIG.7 that the diameter of an effective spot of the mixture of the fuel injected from the fuel injection port of the injection nozzle 11a and air at the intake valve opening 3e is smaller than the radius of the intake valve opening and the axis of this effective spot passes through the intake valve opening 3e and crosses an inner peripheral wall of the cylinder.

In other words, the injector 11 is disposed so that the injection nozzle 11a, as seen in FIG.7, is located within an area connecting the base end of the valve stem 7b when the intake valve opening 3e is closed with the valve head 7a, an intersection between the axis of the intake valve 7 and the center line B of the intake port 3g and an intersection between the center line B of the intake port 3g and an outer connecting port 3j at the upstream end of the cylinder head 3.

Note that this injector 11 is preferably disposed in such a way the distance from the opening plane of the intake valve opening 3e to the injection nozzle 11a is no greater than 4.0 cm.

Furthermore, the injector 11 directly injects the fuel from the intake valve 3e opened during fuel injection into the cylinder bore 2b. For example, the injection timing of the injector 11 with respect to the intake valve opening 3e is controlled by a control apparatus such as an ECU (Engine Control Unit).

The front wall of the intake port 3g is provided with a fixing hole 3m extending therethrough so that the exterior thereof communicates from the outside with the interior of the intake port 3g.

The part of the fixing hole 3m near the intake port communicating portion thereof forms an injection passage 14 for guiding the injected fuel from the intake port 3g to the interior of the cylinder bore 2b through the intake valve opening, and a cylindrical holder 12 is fitted firmly in the injection passage 14.

In a support hole 12a positioned on an axially outer side of this holder 12, the injection nozzle 11a of the injector 11 is fitted.

In this way, the injection nozzle 11a is disposed between the axis of the intake valve 7 and center axis B of the intake port 3g, close to an end of the intake port 3g on the intake valve side.

The fuel injection port of the injection nozzle 11a is shaped so that the fuel is injected as branch currents flowing to the left and right intake valve openings 3e, 3e.

An axially inner side portion of the holder 12 forms an injection port 12b. Thus, the fuel injected from the injection nozzle 11a of the injector 11 so that the fuel branched in two directions is mixed with the atomization air in the injection port 12b, the resultant gas/air mixture being supplied from the injection port 12b to the interior of the combustion chamber (cylinder bore 2b) through the branch passages 3i, 3i of the intake port 3g.

The injection port 12b of the holder 12 is opposite to the partition wall 3h, in which a recessed portion 3n is formed so as to avoid the collision of the fuel, which is injected from the injector 11, with the partition wall.

An annular air chamber 12c is formed between a portion formed to a smaller diameter on an outer circumferential part of the injection port 12b of the holder 12 and the fixing hole 3m, and the air chamber 12c communicates with the interior of the injection port 12b by a plurality (four in this embodiment) of communication ports 12d formed in a wall of the holder 12 so that the communication ports extend radially through the same wall at regular angular intervals.

A downstream end opening (connecting port) 13a of a sub-passage 13 communicates with the air chamber 12c. The sub-passage 13 extends along the intake port 3g toward an upstream side, and its upstream end opening 13b communicates with a space between the first and second throttle valves 5a, 5b in the throttle body 5.

Out of the four communication ports 12d of this embodiment, the axes of two communication ports 12d positioned on the side of the downstream end opening 13a form an angle of 45° with respect to the axis of the downstream end opening 13a. That is, the communication ports 12d are formed in the direction that is shifted from the downstream end opening 13a.

An intake pipe 31 forming a remaining portion of the intake passage is connected to the throttle body 5. This intake pipe 31 extends upward from the throttle body 5, and then extends through a space between left and right leg portions of the pivotable brackets 24 as the intake pipe is bent arcuately in conformity with a shape of a bottom surface of an intermediate portion 22c of the storage box 22 and then extends to a rear side of the vehicle. The rear end portion thereof is joined to a front wall 32a of an air cleaner 32.

This air cleaner 32 is provided on an upper wall of the crank case 23 positioned below the intermediate portion 22c of the storage box 22 and behind the cylinder head 3 (see FIG.9).

The position in which the air cleaner is provided is not limited to the upper side of the crank case 23. The air cleaner may also be provided below the storage box 22 and on an upper surface of the transmission case of the engine unit 1.

Reference numeral 33 in FIG.6 denotes a fuel supply hose connected to the injector 11. This fuel supply hose 33 extends through a space between the intake pipe 31 and one leg portion of the pivotable bracket 24, and is connected to a fuel pump provided in the fuel tank. Although this fuel tank is provided on a rear side of the storage box 22, the fuel tank may also be provided between the left and right main pipes 20a.

In this way, this embodiment provides a motor cycle provided with an engine located under a seat 21, whose cylinder head 3 is disposed on a front side of the vehicle, with a intake pipe 31 extending from above the cylinder head 3 to the rear of the vehicle disposed above the engine, the engine comprising an intake valve mounting section in which an intake valve 7 for sucking air into a cylinder is mounted, an exhaust valve mounting section in which an exhaust valve 6 for exhausting the gas from the cylinder is mounted, an intake port 3g connected to an intake pipe 31 for supplying outer air into the intake valve 7 (more specifically, intake valve opening 3e), an injector mounting section in which an injector 11 for ejecting a fuel is provided and a fuel injection port is disposed in a position between an axis of the intake valve 7 and a center axis of the intake port 3g, close to an end of the intake port 3g on the intake valve side, and a cylinder head 3 with which the intake valve mounting section, the exhaust valve mounting section, the intake port and the injector mounting section are formed integral, wherein the intake pipe 31 and injector 11 are disposed so as to be prevented from interfering with each other.

Then, the function and effect of the apparatus of this embodiment will now be described.

From a no-load operation region to a predetermined partial load operation region, the first throttle valve 5a on the downstream side is fully closed, and the opening and closing of the second throttle valve 5b is controlled in accordance with a throttling operation. In an operation region in which a load is smaller than that in the partial load operation region, an intake vacuum on the side of the engine works as it is on the sub-passage 13, so that the whole quantity of the intake air is introduced from the interior of the throttle body 5 to the air chamber 12c through the sub-passage 13. The intake air is then introduced to the air chamber 12c into the injection port 12b through the communication ports 12d. In the injection port 12b, the fuel injected from the injection nozzle 11a thereinto is mixed thoroughly with the fuel as the fuel is atomized. The resultant gas/air mixture is supplied to the interior of the combustion chamber from the left and right intake valve openings 3e through the left and right sides of the recess 3n of the partition wall 3h.

In this case, the injection nozzle 11a of the injector is placed in a position close to the intake valve openings 3e, that is, the injection nozzle 11a is disposed at a position between the axis of the intake valve 7 and center axis B of the intake port 3g and a position close to an end of the intake port 3g on the intake valve side. More specifically, the fuel inject ion port of the injection nozzle 11a is placed in a position which is offset from the straight line C parallel to the cylinder axis A, and which passes the intake-side end portion of the valve operating mechanism, toward the side of the cylinder axis A. Because this injection nozzle 11a and intake valve openings 3e are close, the fuel injected from the injection nozzle 11a is mixed with air and the mixture is directly injected into the intake valve openings 3e. Therefore, the area of the wall surface to which the fuel adheres becomes smaller, and the quantity of the fuel adhered on the wall surface decreases accordingly. This enables the fuel consumption during a cold operation of the engine to be improved, and the deterioration of the condition of an exhaust gas due to the discharge of an unburned fuel which occurs when the fuel is cut off and during the idling stop of the engine to be suppressed. Moreover, an increase in the rotational speed of the engine with respect to a sudden operation of a throttle does not delay, and some other advantages can be obtained, i.e., the responsivity of the throttle can be improved.

The gas/air mixture is supplied frommainly an exhaust-side portion of the annular gap between the intake valve opening 3e and the valve head 7a of the opened intake valve 7 in the axial direction along the inner surface of the cylinder bore. Therefore, a tumble (vertical vortex) certainly occurs in the cylinder bore 2a, and the combustion efficiency of the gas/air mixture is also improved by the atomization of the fuel.

In this embodiment, the cam shaft 8 is provided by being offset from the cylinder axis A toward the exhaust side so that the angle θ2 formed by the cylinder axis A and intake valve 7 becomes smaller than the angle θ1 formed by the cylinder axis A and exhaust valve 6. Namely, the intake valve 7 is stood up so as to be drawn close to the cylinder axis A.

That is, the cylinder head 3 of the engine 1 forms the intake valve mounting section, exhaust valve mounting section, intake port and fuel injection port integral with the injector mounting section disposed at a position between the axis of the intake valve and center axis of the intake port and a position close to an end of the intake port on the intake valve side. Thus, a space for providing the injector 11 close to the intake valve opening 3e can be secured on the intake side of the cylinder head 3, enabling the above-mentioned quantity of deposition of the fuel on the wall surface to be reduced, the throttling responsivity to be improved, and the combustion efficiency of a gas/air mixture to be improved.

The portion of the injection passage in which the injection nozzle 11a is positioned and the portion of the throttle body (a part of the intake passage) 5 which is between the first and second throttle valves 5a, 5b are communicated with each other by the sub-passage 13, and the first throttle valve 5a is fully closed in an operation region between the no-load operation region to the predetermined partial load operation region. Therefore, a large quantity of intake air can be supplied reliably as the atomization air to the injection nozzle 11a, so that the fuel atomization can be facilitated. Furthermore, according to Embodiment 1, in the cylinder head 2 with which the exhaust valve 6 and intake valve 7 arranged symmetrically with respect to the axis of the cylinder as the center, and the intake port 3g arranged perpendicular to the axis of the cylinder bore 2b are formed integral, the injection nozzle 11a at ends of the injector 11 is disposed at a position between the axis of the intake valve 7 and the center axis B of the intake port 3g, close to an end of the intake port 3g on the intake valve side. For this reason, in the head cylinder 3, the injector 11 is easily arranged at such a position that the diameter of an effective spot of the mixture of the fuel injected from the fuel injection port of the injection nozzle 11a and air at the intake valve opening is smaller than the radius of the intake valve opening 3e and the axis of the effective spot passes through the intake valve opening 3e and crosses an inner peripheral wall of the cylinder bore 2b at an acute angle.

Furthermore, since the throttle body 5 is connected to the intake pipe 25 so that the throttle body 5 comes closer to the intake port 3g, it is possible to quickly respond to the opening and closing of the first and second throttle valves 5a, 5b in the throttle body 5 and intake the air into the cylinder bore 2b by the intake valve openings 3e. That is, the responsivity to the throttle opening degree can be improved.

The partition wall 3h defining the left and right branch passages 3i, 3i is provided with a recess 3n for preventing the injected fuel from colliding with the partition wall. Therefore, even when the injector 11 is provided in the middle between the two branch passages 3i, 3i, the fuel injected as branch currents directed to the two intake valve openings 3e, 3e can be prevented from colliding with and depositing on the partition wall 3h.

In this embodiment, the injector 11 is provided very close to the intake valve openings 3e of the cylinder head 3. This enables the quantity of upward projection of the injector 11 to be reduced much more when the engine unit 1 is provided vertically pivotably below the storage box 22 than when the injector is provided in the intake manifold.

That is, it is possible to provide a large space between the seat 21 and intake pipe 31, that is, a large space in which the storage box 21 is provided.

This causes the injector 11 to rarely interfere with the bottom surface of the intermediate portion 22c of the storage box 22, enabling the necessity of sacrificing the capacity of the storage box 22 for avoiding this interference to be eliminated.

That is, since the intake pipe 31 which is the intakemanifold is not provided with the injector 11 in this embodiment, it is possible to increase the capacity of the portion of the storage box 22 opposite to the intake pipe 31 compared with the structure in which the intake pipe is provided with the injector 11. More specifically, as shown in FIG. 9, it is possible to form a greater storage space (storage box) by an area 22y in front of the cylinder head 3 and above the engine 1 compared to the conventional structure in which the intake pipe is provided with the injector.

Since the throttle body 5 is provided directly on the upper surface of the cylinder head 3, the throttle body 5 and injector 11 come close to each other. Therefore, the length of the sub-passage 13 can be reduced when the injector 11 and the upstream side of the throttle valve are connected together, so that the construction of the engine can be simplified.

It is also possible to secure easily between the upper wall of the cylinder head 2 and the main pipe 20b a space for providing the throttle body 5, bend the intake pipe 31 at only one portion thereof with, moreover, a large radius of curvature, and reduce a intake resistance.

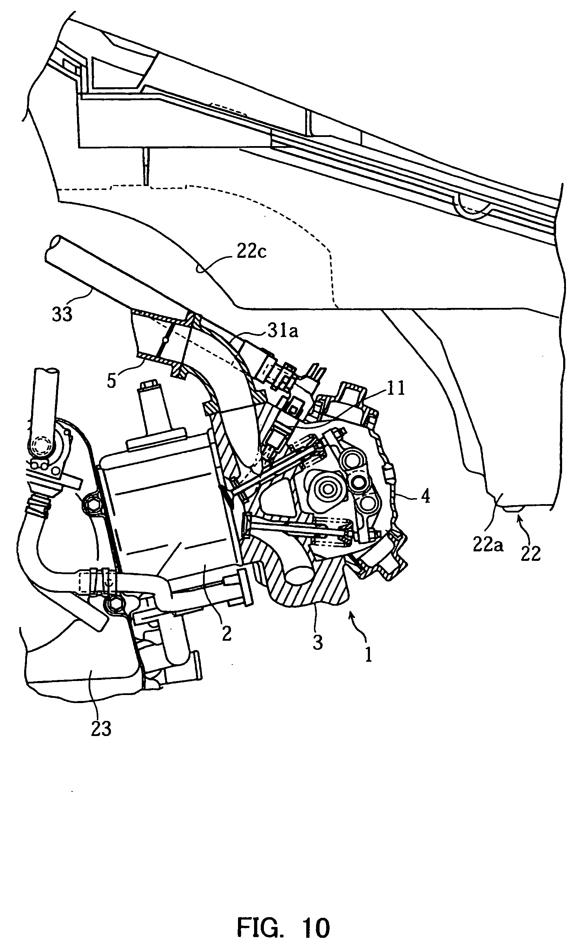

In the first embodiment, the throttle body 5 is joined directly to the upper wall of the cylinder head 2. As shown in FIG.10, which illustrates the second embodiment, it is also allowable to provide a joint member 31a to an upper wall of a cylinder head 3, provide a throttle body 5 on an upstream end of the joint member, and connect the throttle body 5 to an air cleaner by an intake pipe.

When the engine is formed in this manner, it becomes possible to bend an intake pipe 31 rearward in a position in the immediate neighborhood of the upper wall of the cylinder head 3, enlarge a gap between an intake passage and a bottom wall of an intermediate portion 22c of the storage box 22, and increase the storage capacity of the storage box by utilizing this enlarged gap.

Furthermore, this embodiment adopts a structure in which the storage box 22 is disposed between the lower portion of the seat 21 and the engine on which the intake pipe 31 is disposed, but a fuel tank may also be provided instead of the storage box 22. When the storage box 22 is replaced by the fuel tank, unlike the structure in which the intake pipe 31 is provided with the injector 11, the injector 11 is mounted in the cylinder head 3 and disposed in a position where the injector 11 and the intake pipe 31 do not interfere with each other, with the result that the capacity of the fuel tank can be increased.

This application is based on Japanese Patent Application No.2002-311487 filed on October 25, 2002, entire content of which is expressly incorporated by reference herein.

### Industrial Applicability

The present invention is applicable to a motor cycle mounted with an engine provided with an intake unit having an injector in an intermediate portion of an intake passage.

## Claims

1. A motor cycle provided with an engine and an intake pipe, said engine being positioned under a seat with a cylinder head being disposed on a front side of the vehicle, and said intake pipe being positioned above the engine and extending from above the cylinder head to a rear of the vehicle, said engine comprising:
an intake valve mounting section in which an intake valve for sucking air into a cylinder is mounted;
an exhaust valve mounting section in which an exhaust valve for exhausting a gas from said cylinder is mounted;
an intake port that is connected to said intake pipe for supplying outer air into the intake valve; and
an injector mounting section in which an injector for injecting a fuel is mounted and in which a fuel injection port is positioned in a position between an axis of the intake valve and a center axis of the intake port, close to an end of the intake port on the intake valve side, wherein:
the intake valve mounting section, exhaust valve mounting section, intake port and injector mounting section integrally form the cylinder head are formed integral; and
the intake pipe and the injector are positioned so as to be prevented from interfering with each other.

2. The motor cycle according to claim 1, wherein, below the seat, a storage box or a fuel tank is provided opposite to said intake pipe.

3. The motor cycle a according to claim 1, wherein:
part of the outer air is guided from the intake pipe into the fuel injection port of the injector; and
the injector mounting section positions the injector at such an angle that a mixture of the injected fuel and part of the outer air generates air motion in the cylinder.

4. The motor cycle according to claim 1, further comprising:
a main passage provided in the intake pipe for supplying the outer air into the intake port; and
a sub-passage branched from the main passage, an open end of which is positioned close to the fuel injection port of the injector.

5. The motor cycle according to claim 1, wherein the injector directly injects a fuel into the cylinder through an intake valve that opens during fuel injection.
